(19) Europäisches Patentamt
European Patent Office
Office européen des brevets

(11) Numéro de publication : **0 534 830 A1**

# (12) DEMANDE DE BREVET EUROPEEN

(21) Numéro de dépôt : **92402576.0**

(51) Int. Cl.$^5$ : **C08F 8/20,** C08F 255/02

(22) Date de dépôt : **18.09.92**

(30) Priorité : **26.09.91 FR 9111846**

(43) Date de publication de la demande :
**31.03.93 Bulletin 93/13**

(84) Etats contractants désignés :
**AT BE CH DE DK ES FR GB GR IE IT LI LU NL PT SE**

(71) Demandeur : **ELF ATOCHEM S.A.**
**4 & 8, Cours Michelet La Défense 10**
**F-92800 Puteaux (FR)**

(72) Inventeur : **Flat, Jean-Jacques**
**Le Bourg**
**F-27800 Franqueville (FR)**
Inventeur : **Lambla, Morand**
**2 rue Albert Camus**
**F-67800 Hoenheim Bischheim (FR)**

## (54) Polypropylène modifié bromé à cristallinité controlée, son procédé de fabrication et son utilisation comme agent de collage.

(57) L'invention concerne un polypropylène modifié bromé à cristallinité contrôlée.
Il est préparé par greffage et/ou substitution radicalaire d'un composé organique bromé possédant notamment une liaison C-Br ou N-Br labile.
Il peut servir au collage de divers substrats et notamment de substrats métalliques.

EP 0 534 830 A1

La présente invention a pour objet un polypropylène modifié bromé à cristallinité contrôlée ainsi qu'un procédé jour la préparation d'un tel polypropylène.

L'amélioration des performances des catalyseurs Ziegler-Natta utilisés dans le domaine de la synthèse des polyoléfines a conduit, notamment dans le cas particulier du polypropylène à des polymères ayant une isotacticité au moins égale à 95 %.

Cette isotacticité est à la base du caractère semi-cristallin du polypropylène, lié à la grande régularité des enchaînements des unités propylène qui confère au polypropylène un niveau de propriétés physico-chimiques élevé (bonne inertie chimique, résistance à l'abrasion, bon équilibre des propriétés mécaniques).

Cependant ce caractère semi-cristallin du polypropylène s'avère être un inconvénient jour certaines applications jour lesquelles on recherche notamment des propriétés de souplesse, de résistance à la déchirure et lorsqu'on désire une zone de ramollissement plus large et améliorer l'adhésion notamment sur les métaux.

A cette fin on peut détruire partiellement ou totalement la régularité des enchaînements des unités propylène jar l'introduction de défauts dans le polymère.

On a ainsi modifié la structure moléculaire du polypropylène par copolymérisation, essentiellement avec de l'éthylène, ce qui conduit à toute une gamme de polypropylène avec des propriétés diversifiées.

On peut ainsi faire varier le rapport éthylène/propylène ainsi que les masses moléculaires et leur distribution.

Dans le cas par exemple d'un polypropylène modifié éthylène de façon statistique, le comonomère réduit la rigidité ainsi que la température de fusion tout en améliorant les propriétés à l'impact.

Les copolymères polypropylène choc peuvent contenir jusqu'à 90 % d'homopolymère du propylène et un caoutchouc éthylène-propylène. Cette copolymérisation entraîne une chute notable de la température de transition vitreuse.

Fettes M.A. (Cristalline Olefin polymers, partie 2, P 239, 1964) signale que la cristallinité des polyoléfines peut être également réduite par une modification chimique comme la chloration ou la chlorosulfonation.

Dans le cas du polyéthylène par exemple, les propriétés du polymère chloré ne dépendent pas seulement du taux d'halogène introduit qui est généralement au moins égale à 20 % en poids, mais aussi des méthodes de modification.

Celles-ci peuvent être réalisées en solution, en suspension (aqueuse ou non) ou en lit fluidisé dans le cas ou l'agent chlorant est le chlore gazeux.

Cette façon de procéder présente l'inconvénient d'introduire des taux de chlore élevés -au moins 20 % en poids- pour abaisser de façon notable les points de fusion.

De plus ceci engendre des quantités importantes de sous-produits toxiques et corrosifs qui nécessitent d'une part des appareillages spéciaux et d'autre part entraîne des opérations de traitement onéreuses.

Signalons qu'il existe également de nombreuses techniques de greffage de monomères insaturés tels que l'acide acrylique, l'anhydride maléique qui permettent de modifier les polyoléfines , notamment le polypropylène. Cependant les taux de greffage sont faibles - 0,1 à 5 % en poids - et n'affectent par vraiment la cristallinité globale de la polyoléfine greffée.

En outre les quantités nécessaires de peroxydes utilisés dans le cas du greffage radicalaire entraînent une dégradation important des masses moléculaires.

On a maintenant trouvé un polypropylène modifié à cristallinité contrôlée caractérisé en ce qu'il contient du brome fixé au polypropylène et comporte éventuellement un ou plusieurs greffons représentés par les formules :

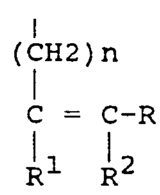
(I)

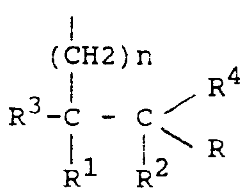
(II)

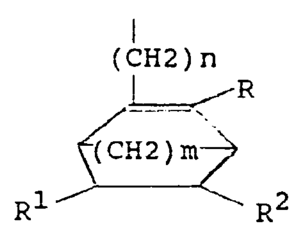
(III)

dans lesquelles R représente un atome d'hydrogène, un atome de brome, un radical phényle, un radical cyclohexyle, un radical hydrocarboné aliphatique linéaire ou ramifié ayant jusqu'à 6 atomes de carbone éventuellement substituée par un ou plusieurs atomes d'halogène ;

$R^1$ et $R^2$, identiques ou différents, représentent chacun un atome d'hydrogène, un radical phényle, un radical cyclyhexyle, un groupe carboxy, un radical méthoxycarbonyl, un radical hydrocarboné aliphatique linéaire ou ramifié ayant jusqu'à 4 atomes de carbone éventuellement substitué par des atomes d'halogène,

$R^1$ et $R^2$ peuvent également former ensemble un groupement anhydride -C(0)-O-C(0)-

$R^3$ et $R^4$, identiques ou différents, représentent chacun un atome d'hydrogène, un radical hydrocarbone aliphatique linéaire ou ramifié ayant jusqu'à 4 atomes de carbone,

n et m sont des nombres allant de zéro à 2.

Par polypropylène modifié contenant du brome selon l'invention, on entend un polypropylène constitué essentiellement d'unités propylène comportant des atomes de brome fixés sur la chaîne macromoléculaire et éventuellement un ou plusieurs greffons de formule (I), (II) et/ou (III).

La teneur en brome fixé au polypropylène est au plus égale à 1 % en poids et de préférence comprise entre 0,01 % et 0,5 % en poids.

La teneur en greffons de formule (I), (II) et/ou (III) est au plus égale à 10 % en poids et de préférence comprise entre 0,05 % et 3 % en poids.

Le polypropylène modifié bromé selon l'invention présente l'avantage d'avoir une cristallinité qui peut être au plus égale à celle d'un polypropylène non bromé et être abaissée jusqu'à zéro.

Selon l'invention le polypropylène modifié contenant du brome présente également de bonnes propriétés adhésives sur de nombreux substrats tels que acier, aluminium et un allongement à la rupture qui peut être égale à celui d'un polypropylène non bromé et atteindre 2800 % voire d'avantage.

Cet allongement est généralement obtenu avec des teneurs en brome au plus égale à 0,5 %.

L'invention concerne également le procédé de fabrication de ce polypropylène modifié contenant du brome.

Il est préparé par greffage et/ou substitution radicalaire sur le polypropylène d'un composé organique bromé en présence d'un amorceur radicalaire.

Par composé organique bromé on entend toute molécule qui comporte au moins une liaison A-Br suffisamment labile jour générer des radicaux brome Br· par scission homolytique. Dans la liaison A-Br, A représente de préférence un atome de carbone ou un atome d'azote.

Le composé organique bromé possédant la liaison A-Br peut répondre notamment à l'une des formules suivantes :

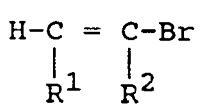 ,

(IV)

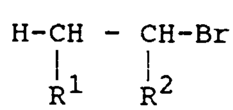 ,

(V)

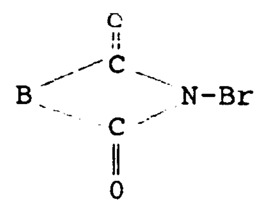

(VI)

dans lesquelles :

$R^1$ et $R^2$, identiques ou différents, représentent chacun un atome d'hydrogène, un groupe carboxy, un radical phényle, un radical cyclohexyle, un radical méthoxycarbonyle, un radical hydrocarboné aliphatique linéaire ou ramifié ayant jusqu'à 4 atomes de carbone éventuellement substitué par des atomes d'halogène,

$R^1$ et $R^2$ peuvent également former ensemble un groupement anhydride -C(0)-OC(0)-,

B représente un radical divalent de structure

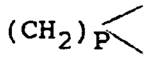 , 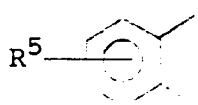 , 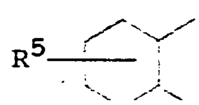

dans lesquelles $R^5$ représente un atome d'hydrogène, un radical hydrocarboné aliphatique linéaire ou ramifié ayant jusqu'à 10 atomes de carbone, p est un nombre entier allant de 2 à 4,

Parmi les composés de formule (IV) on préfère :

- l'anhydride bromomaléique,
- l'acide bromo-3 acrylique,
- l'acide bromo-2 acrylique,
- le β bromostyrène.

Parmi les composés de formule (V) on préfère :

- l'acide bromosuccinique
- l'anhydride bromosuccinique

Parmi les composés de formule (VI) on préfère :

- la N-bromosuccinimide,

Selon le procédé conforme à l'invention, on peut utiliser un ou plusieurs composés organiques de formule (IV), (V) et/ou (VI).

De préférence, on utilisera un composé de formule (VI) associé avec un composé de formule (IV) ou (V).

Selon une variante de l'invention on peut utiliser un composé organique bromé de formule (VI) associé avec au moins un monomère non bromé porteur d'au moins une double liaison active en polymérisation radicalaire et d'au moins une fonction anhydride d'acide cyclique à 5 centres ou bien d'une fonction acide, ou bien encore d'une fonction ester.

A titre d'illustration de tels monomères non bromés on citera :

- l'acide itaconique, l'acide citraconique, l'acide mèsaconique, l'anhydride itaconique, l'anhydride citraconique, l'anhydride méthyl-2 maléique, l'anhydride dimethyl-2,3 maléique, l'anhydride bicyclo [2.2.1] hept-5-ène-2,3 dicarboxylique, l'anhydride méthyl-4-cyclohex-4-ène 1,2 dicarboxylique, l'anhydride bicyclo [2.2.2.] oct-5-ène 2,3-dicarboxylique et tout particulièrement l'anhydride maléique.

Selon l'invention les monomères non bromés précédents associés au composé (VI) ainsi que les composés de formule (IV) peuvent être associés avec un comonomère tel que le styrène ou le vinyle toluène.

S'agissant du polypropylène on préfère utiliser un homopolymère du propylène ou un copolymère bloc du propylène contenant au plus 40 % molaire d'éthylène et de préférence 0,5 % à 40 % molaire d'éthylène, ou bien un copolymère statistique du propylène contenant au plus 40 % molaire d'éthylène.

On ne sortirait pas du cadre de l'invention si le polypropylène contenait de faibles quantités d'une autre unité monomère, en particulier une ou plusieurs $\alpha$-oléfines contenant au plus 6 atomes de carbone.

Comme amorceur radicalaire on peut citer à titre non limitatif les peroxydes organiques tels que le peroxyde de dicumyle, le peroxyde de benzoyle, le 2,5-dimethyl-2,5 bis(tertio butyl peroxy) hexane (DHBP), le 2,5-dimethyl-2,5 bis(tertioamyl)-hexane (DHAP), le peroxyde de ditertiobutyle (DTBP), le 2,5-dimethyl-2,5 bis(tertio butylperoxy)hexyne (DYBP).

Les quantités d'amorceur radicalaire peuvent varier dans des limites comprises entre 0,01 % et 7 % en poids par rapport au polypropylène mis en oeuvre et de préférence entre 0,1 et 4 % en poids.

On utilisera des quantités de composés organiques bromés seuls ou associés à au moins un monomère non bromé au plus égale à 15 % en poids et de préférence comprise entre 0,3 et 5 % en poids.

Selon l'invention le greffage et/ou substitution radicalaire des composés organiques bromés de formule (IV), (V) et/ou (VI) ainsi que de (VI) associé avec un monomère non bromé sur le polypropylène peut s'effectuer à l'état fondu, mais on ne sortirait pas du cadre de l'invention si l'on opérait en solution dans un solvant du polypropylène.

Le greffage et/ou substitution radicalaire à l'état fondu consiste à mélanger, généralement à sec, le polypropylène avec des quantités déterminées des composés bromés seuls ou associés à un monomère non bromé et d'amorceur radicalaire, puis d'introduire, le mélange obtenu dans un appareil de malaxage assurant une bonne dispersion.

Tout appareil de malaxage assurant une bonne dispersion peut donc convenir, notamment les malaxeurs type HAAKE, les comalaxeurs type BUSS ou les extrudeuses type WERNER et PFLEIDER.

On utilise avantageusement une extrudeuse équipée d'une double vis corotative munie d'au moins une pompe permettant d'extraire les éventuels produits volatils susceptibles de se former.

Tout ou partie de l'opération de greffage et/ou substitution peut être réalisée en présence ou en absence d'air, sous atmosphère de gaz inerte tel que l'azote.

On porte le mélange à une température comprise entre 170°C et 300°C, et de préférence entre 210°C et 260°C.

Le temps de séjour moyen de la matière fondue dans l'extrudeuse est choisi habituellement entre 15 secondes et 6 minutes et de préférence entre 40 secondes et 3 minutes.

On peut mesurer le taux de greffage des composés organiques bromés et monomères non bromés sur le polypropylène par dosage des différentes fonctions anhydride et/ou acide par spectrométrie infra-rouge.

Le pourcentage en brome résultant de la substitution a été déterminé par analyse élémentaire.

Les mesures des masses moléculaire moyenne en nombre $\overline{Mn}$ et en poids $\overline{Mw}$ ont été déterminées par chromatographie d'exclusion stérique (CES).

Le polypropylène modifié selon l'invention conserve des niveaux de masses moléculaires élevés, très supérieurs à ceux des polypropylènes greffés connus, notamment par de l'anhydride maléique.

La cristallinité du polypropylène modifié bromé a été déterminée jar calorimétrie différentielle à balayage (DSC).

Selon les teneurs en peroxydes, en composés organiques bromés et selon la température de greffage on obtient des polypropylènes modifiés bromés dont la cristallinité s'échelonne entre 0 % et la cristallinité du polypropylène non bromé qui se situe généralement vers 45 %.

Ceci entraîne un abaissement important du point de fusion voire sa disparition.

En outre, le polypropylène modifié bromé selon l'invention présente l'avantage d'être soluble à froid en des quantités qui peuvent atteindre 10 à 15 % en poids de polypropylène solubilisé dans des solvants aliphatiques tels que l'hexane, dans des solvants cycloaliphatiques tels que le cyclohexane ou le méthylcyclohexane, dans des solvants aromatiques tels que le toluène ou le xylène et dans des solvants polaires tels que le THF ou le chloroforme.

Le procédé de greffage et/ou substitution radicalaire des composés organiques bromés (IV), (V) et/ou (VI) ainsi que des composés de formule (VI) associés à un ou plusieurs monomères non bromés tels que l'anhydride maléique présente l'avantage d'aboutir à des rendements de greffages élevés, quasi quantitatifs alors que toutes choses égales par ailleurs, les procédés de greffage, notamment d'anhydride maléique seul, ou éventuellement associé avec un comonomère tel que le styrène conduisent à des rendements plus faibles.

Les exemples qui suivent illustrent l'invention.

## EXEMPLE 1

Dans une extrudeuse double vis corotative Werner et Pfleider de type ZSK 30 (L/D = 42) munie d'une pompe à anneaux liquides, on introduit en continu un mélange en poids comprenant :

- 100 parties d'un homopolymères du propylène d'indice de fusion (Melt Index : MI) égal à 5 dg/mn mesuré à 230°C sous 2,16 kg, de point de fusion égal à 166°C et une cristallinité mesurée par DSC de 45 %,
- 1,2 parties d'anhydride bromomaléique,
- 2 parties de 2,5 diméthyl 2,5 bis (t-buty peroxy) hexane (DHBP).

Les conditions de marche sont les suivantes :

- températures : 235°C - 260°C
- vitesse de rotation : 80 tr/mn
- débit : 6 kg/h
- temps de séjour moyen : 3 minutes.

A la sortie de filière, le jonc passe dans un bain d'eau de refroidissement.

On prélève un échantillon du polypropylène modifié bromé que l'on dissout dans le xylène puis précipite dans l'acétone pour le purifier. Le produit est séché pendant une nuit dans une étuve ventilée avant toute caractérisation.

► Par dosage des fonctions anhydride par spectrométrie infra-rouge on détermine :

- 0,46 % en poids d'anhydride bromomaléique greffé
- 0,43 % en poids d'anhydride maléique greffé.

Le rendement de greffage, calculé comme le rapport entre le nombre de moles d'anhydride maléique et d'anhydride bromomaléique greffés et le nombre de moles d'anhydride bromomaléique introduites est égal à 100 %.

► Par analyse élémentaire on détermine le pourcentage de brome fixé sur la chaîne du polypropylène qui est égal à 0,16 % en poids.

► Les mesures des masses moléculaires moyenne en nombre $\overline{Mn}$ et en poids $\overline{Mw}$ ont été déterminées par CES sur un appareil Waters 150 à 145°C dans le trichlorobenzène avec un débit de 1 ml/mn.

Les échantillons ont été dissous à des concentrations de 2 g/l pendant 4 heures à 150°C sous azote puis filtrés à chaud. La détection est faite par refractométrie. Les masses moléculaires données sont en équivalents polypropylène et ont été calculés à partir de la loi Mark - Houvink pour le polypropylène : $[\eta] = 21.10^{-3}.M^{0,75}$.

Les résultats sont les suivants :

$\overline{Mn}$ = 46 000

$\overline{Mw}$ = 138 000

A titre indicatif, un polypropylène greffé anhydride maleïque - 0,67 % en poids - dans des conditions de température similaires avec 2 parties d'anhydride maléique pour 100 parties en poids de polypropylène au départ (rendement de greffage : 33,5 %) en présence de 0,5 pcr de DHBP a une $\overline{Mn}$ de 29 000 et une $\overline{Mw}$ de 52 000.

► La fonctionnalité moyenne en atome de brome fixé au polypropylène modifié est donnée par la formule :

$$\overline{F}_{Br} = \frac{Br\ \%\ X\ \overline{Mn}}{100\ X\ 80}$$

Pour le polypropylène modifié bromé obtenu $\overline{F}_{Br}$ = 0,9.

► La cristallinité du polypropylène modifié brome ainsi obtenu a été étudiée par DSC sur un appareil DSC 4 de Perkin-Elmer avec une vitesse de montée en température de 10°C/mn.

Les thermogrammes de fusion (Figure 1) et de cristallisation (Figure 2) montrent une destruction totale de la cristallinite du polypropylène et indiquent que tout pic de fusion a disparu et que le polypropylène modifie bromé a une température de transition vitreuse (Tg) égale à 0°C.

► Essai de solubilité : le tableau 1 ci-après indique que le polypropylène modifié bromé est soluble à froid à raison de 10 % en poids dans les solvants mentionnés.

Dans les mêmes conditions le polypropylène de départ est totalement insoluble.

| Poids de polypropylene modifié bromé (en g) | SOLVANT | | TEMPS de dissolution complète |
|---|---|---|---|
| | Nature | Poids (en g) | |
| 20 | hexane | 80 | partielle |
| 10 | hexane | 90 | 1 H 30 |
| 10 | THF | 90 | 1 H 22 |
| 10 | méthylcyclohexane | 90 | 2 H 40 |
| 5 | méthylcyclohexane | 95 | 2 h 13 |

TABLEAU 1 - Solubilités à froid (23°C) du Polypropylène modifié bromé

► Afin d'évaluer les propriétés mécaniques du polypropylène modifié bromé obtenu on réalise des éprouvettes haltères par découpage de plaques obtenues par compression de granulés à 150°C.

Elles sont comparées avec celles du polypropylène de départ et celles d'un polypropylène greffé anhydride maléique -1 % en poids- dans des conditions opératoires similaires.

Les résultats sont rassemblés dans le tableau 2.

| Polymère | PROPRIETE MECANIQUE | | |
|---|---|---|---|
| | Module (MPa) | Contrainte à la rupture (MPa) | Allongement à la rupture (en %) |
| Polypropylène de départ | 1 590 | 30 | 603 |
| Polypropylène greffé anhydride maléique 1 % | | 24 | 6 |
| Polypropylène modifié bromé (% Br = 0,16) | < 10 | 0,6 | 2 800 |

Tableau 2 -Propriétés mécaniques

► Nous avons mesuré la viscosité de fusion du polypropylène modifié bromé avec celle du polypropylène de départ et celle du polypropylène greffé A.M. 1 % à 200°C sur un rhéomètre capillaire INSTROM type 3211.

Les courbes rhéologiques sont reportées sur la figure 3.

Le polypropylène modifié bromé présente des viscosités identiques au polypropylène de départ au dessus d'une vitesse de cisaillement de 1000 $sec^{-1}$ mais s'avère beaucoup moins visqueux pour de faibles cisaillements.

► Essais-d'adhésion La force d'adhérence obtenue avec ce polypropylène modifié bromé a été mesurée de la façon suivante : des granulés de polymère sont dispersés entre deux feuilles d'aluminium de 100 microns d'épaisseur que l'on place entre les mâchoires d'une soudeuse, réglées à la température de 200°C. On applique alors une pression de 4 bars pendant 300 secondes, retire l'assemblage et le laisse refroidir.

Après avoir découpé des éprouvettes de 2 cm de largeur, on procède à des essais de pelage en T en les

tractionnant à la vitesse de 50 mm/minute au moyen d'un dynamomètre, à la température ordinaire.

Les résultats sont rassemblés dans le Tableau 3.

| PRODUIT | Force de pelage da N/cm |
|---|---|
| Polypropylène de départ | 0 |
| Polypropylène greffé anhydride maléïque (1 %) | 0,25 |
| Polypropylène modifié bromé (Br % = 0,16) | 0,98 |

Tableau 3

## Exemple 2

Dans une cuve d'un malaxeur type HAAKE, on réalise un mélange à une température moyenne de 215°C, avec une vitesse de rotation des pales égale à 64 t/mn pendant 15 minutes avec les quantités des constituants ci-après :

- 100 parties en poids d'un homopolymère du propylène
- ayant les mêmes caractéristiques que dans l'exemple 1,
- 1,2 parties en poids de N-bromosuccinimide
- 2 parties en poids de DHBP.

Le produit obtenu est purifié de la même façon que dans l'exemple 1 et présente les caractéristiques suivantes :

- Brome fixé : 0,15 %
- $\overline{Mn}$ = 45 000
- $\overline{Mw}$ = 138 000
- Taux de cristallinité 15 %
- Fusion = 66°C

## EXEMPLE 3

Selon les conditions opératoires de l'exemple 1, on extrude un mélange en poids comprenant :

- 100 parties d'un homopolymère du propylène ayant les mêmes caractéristiques que dans l'exemple 1,
- 1 partie de N-bromosuccinimide
- 1,5 parties de DHBP

On obtient un produit ayant une cristallinité de 1 % et une Tg de 0°C.

## EXEMPLE 4

Selon les conditions opératoires de l'exemple 1, on extrude un mélange en poids comprenant :

- 100 parties d'un homopolymère du propylène ayant les mêmes caractéristiques que dans l'exemple 1
- 1 partie d'anhydride maléique,
- 1 partie de N-bromosuccinimide,
- 1,5 parties de DHBP,

A la sortie de filière le jonc est traité comme dans l'exemple 1. Le produit est également purifié selon le protocole décrit dans l'exemple 1.

Le produit obtenu présente les caractéristiques suivantes :

- anhydride maléique greffé 0,75 % en poids
- rendement de greffage : 75 %
- brome fixe : 0,082 %
- $\overline{Mn}$ : 35 000
- $\overline{Mw}$ : 89 000
- cristallinité : 18 %
- Température de fusion : 96°C
- Tg : - 2°C.

**Revendications**

1. Polypropylène modifié à cristallinité contrôlée caractérisé en ce qu'il contient du brome fixé au polypropylène.

2. Polypropylène selon la revendication 1, caractérisé en ce qu'il contient un ou plusieurs greffons représentés par les formules :

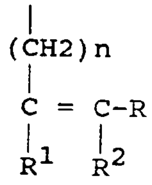
(I)

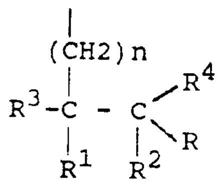
(II)

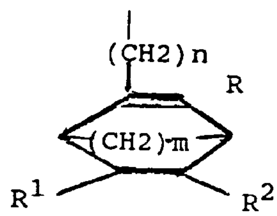
(III)

dans lesquelles R représente un atome d'hydrogène, un atome de brome, un radical phényle, un radical cyclohexyle, un radical hydrocarboné aliphatique linéaire ou ramifié ayant jusqu'à 6 atomes de carbone éventuellement substitué par un où plusieurs atomes d'halogène ;

$R^1$ et $R^2$, identiques ou différents, représentent chacun un atome d'hydrogène, un radical carboxy, un radical méthoxycarbonyl, un radical hydrocarboné aliphatique linéaire ou ramifié ayant jusqu'à 4 atomes de carbone éventuellement substitué par des atomes d'halogène $R^1$ et $R^2$ peuvent également former ensemble un groupement anhydride

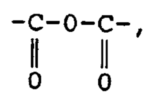

$R^3$ et $R^4$, identiques ou différents représentent chacun un atome d'hydrogène, un radical hydrocarboné aliphatique linéaire ou ramifié ayant jusqu'à 4 atomes de carbone,

n et m sont des nombres allant de zéro à 2.

3. Polypropylène selon la revendication 1, caractérisé en ce que la teneur en brome fixé au polypropylène est au plus égale à 1 % en poids.

4. Polypropylène selon la revendication 3, caractérisé en ce que la teneur en brome est comprise entre 0,01 % et 0,5 % en poids.

5. Polypropylène selon la revendication 2, caractérisé en ce que la teneur en greffons de formule (I), (II), et/ou (III) est au plus égale à 10 % en poids et de préférence comprise entre 0,05 % et 3 % en poids.

6. Polypropylène selon l'une quelconque des revendications 1 ou 2, caractérisé en ce que la cristallinité est comprise entre celle d'un homopolymère du propylène non bromé et zéro %.

7. Polypropylène selon l'une quelconque des revendications 1 ou 2, caractérisé en ce que l'allongement à la rupture peut atteindre 2 800 %.

8. Polypropylène selon la revendication 1, caractérisé en ce que le polypropylène est un homopolymère du propylène.

9. Polypropylène selon la revendication 1, caractérisé en ce que le polypropylène est un copolymère bloc du propylène contenant au plus 40 % molaire d'éthylène et de préférence entre 0,5 et 10 % molaire.

10. Polypropylène selon la revendication 1, caractérisé en ce que le polypropylène est un copolymère statistique du propylène contenant au plus 40 % molaire d'éthylène.

11. Procédé de fabrication du polypropylène modifié à cristallinité contrôlée selon l'une des revendications

1 à 10 caractérisé en ce qu'il comprend un greffage et/ou substitution radicalaire sur le polypropylène d'au moins un composé organique bromé en présence d'un amorceur radicalaire.

**12.** Procédé selon la revendication 11, caractérisé en ce que le composé organique bromé comporte au moins une liaison A-Br dans laquelle A représente un atome de carbone ou un atome d'azote.

**13.** Procédé selon l'une quelconque des revendications 11 ou 12 caractérisé en ce que le composé organique bromé répond à l'une des formules :

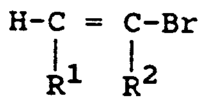 , 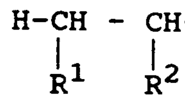 , 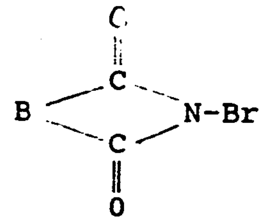

(IV) (V) (VI)

dans lesquelles :

$R^1$ et $R^2$, identiques ou différents, représentent chacun un atome d'hydrogène, un groupe carboxy, un radical phényle, un radical cyclohexyle, un radical méthoxycarbonyle,, un radical hydrocarboné aliphatique linéaire ou ramifié ayant jusqu'à 4 atomes de carbone éventuellement substitué par des atomes d'halogène, $R^1$ et $R^2$ peuvent également former ensemble un groupement anhydride -C(0)-OC(0)-,

B représente un radical divalent de structure

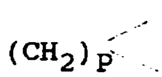 , 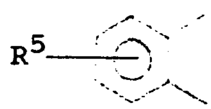 , 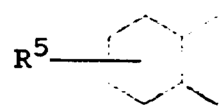

dans lesquelles $R^5$ représente un atome d'hydrogène, un radical hydrocarboné aliphatique linéaire ou ramifié ayant jusqu'à 10 atomes de carbone, p est un nombre entier allant de 2 à 4,

**14.** Procédé selon la revendication 13 caractérisé en ce que les composas organiques de formule (IV) sont :
- l'anhydride bromomaléique
- l'acide bromo-3 acrylique
- le β-bromostyrène.
- l'acide bromo-2 acrylique

**15.** Procédé selon la revendication 13, caractérisé en ce que les composés de formule (V) sont :
- l'acide bromosuccinique,
- l'anhydride bromosuccinique.

**16.** Procédé selon la revendication 13, caractérisé en ce que le composé de formule (VI) est la N-bromosuccinimide.

**17.** Procédé selon l'une quelconque des revendications 11 ou 13 caractérisé en ce que l'on utilise au moins un composé de formule (IV), (V) et/ou (VI).

**18.** Procédé selon l'une quelconque des revendications 11 ou 13, caractérisé en ce que l'on utilise au moins un composé de formule (VI) associé avec au moins un composé de formule (IV) ou (V).

**19.** Procédé selon la revendication 11 caractérisé en ce que l'on utilise au moins un composé organique bromé associé avec au moins un monomère non bromé porteur d'au moins une double liaison active en polymérisation radicalaire et d'au moins une fonction anhydride d'acide cyclique à 5 centres ou bien d'une fonction acide.

**20.** Procédé selon la revendication 19, caractérisé en ce que le monomère non bromé est l'anhydride maléique.

**21.** Procédé selon la revendication 11, caractérisé en ce que l'amorceur radicalaire est un peroxyde organique.

**22.** Procédé selon la revendication 21, caractérisé en ce que le peroxyde organique est le 2,5-dimethyl-2,5 bis(tertiobutyl peroxy)hexane.

**23.** Procédé selon la revendication 11, caractérisé en ce que l'amorceur radicalaire est utilisé en des quantités comprises entre 0,01 % et 7 % en poids par rapport au polypropylène mis en oeuvre et de préférence entre 0,1 et 4 % en poids.

**24.** Procédé selon la revendication 11, caractérisé en ce qu'on utilise des quantités de composés organiques bromés au plus égales à 15 % en poids et de préférence entre 0,3 et 5 % en poids.

**25.** Procédé selon la revendication 19, caractérisé en ce qu'on utilise des quantités de composés organiques bromés et de monomères non bromés au plus égales à 15 % en poids et de préférence entre 0,5 et 5 %.

**26.** Procédé selon la revendication 11, caractérisé en ce que l'on opère à l'état fondu.

**27.** Procédé selon la revendication 26, caractérisé en ce que l'on opère à une température comprise entre 170°C et 300°C et de préférence entre 210°C et 260°C.

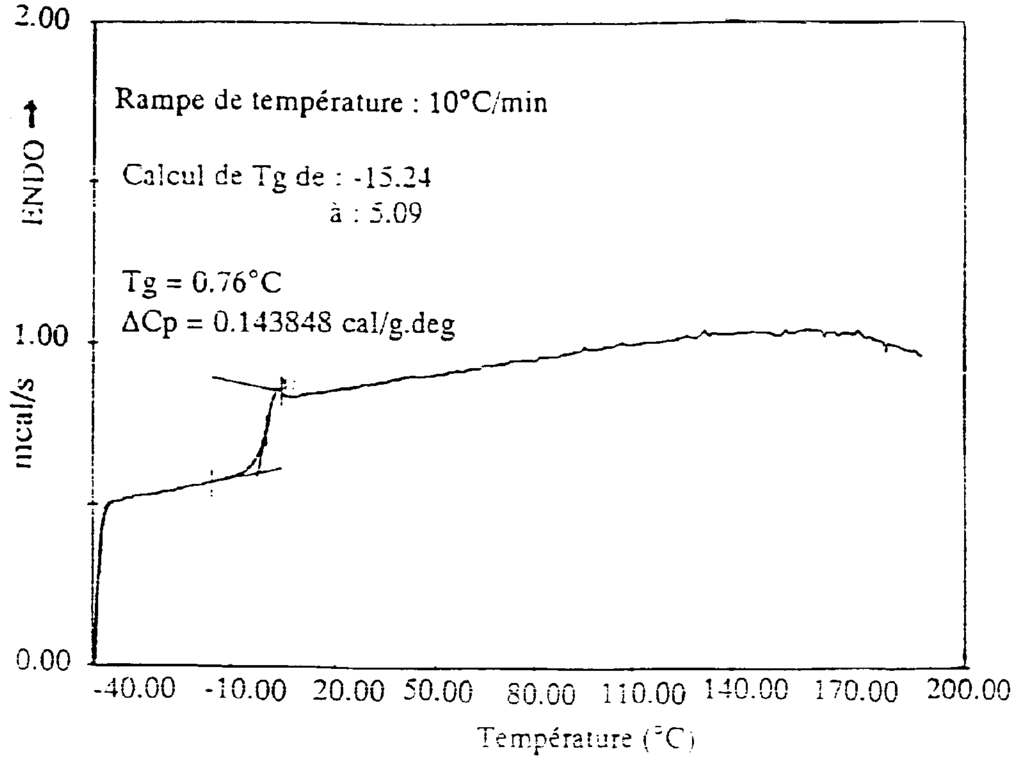


Figure 1

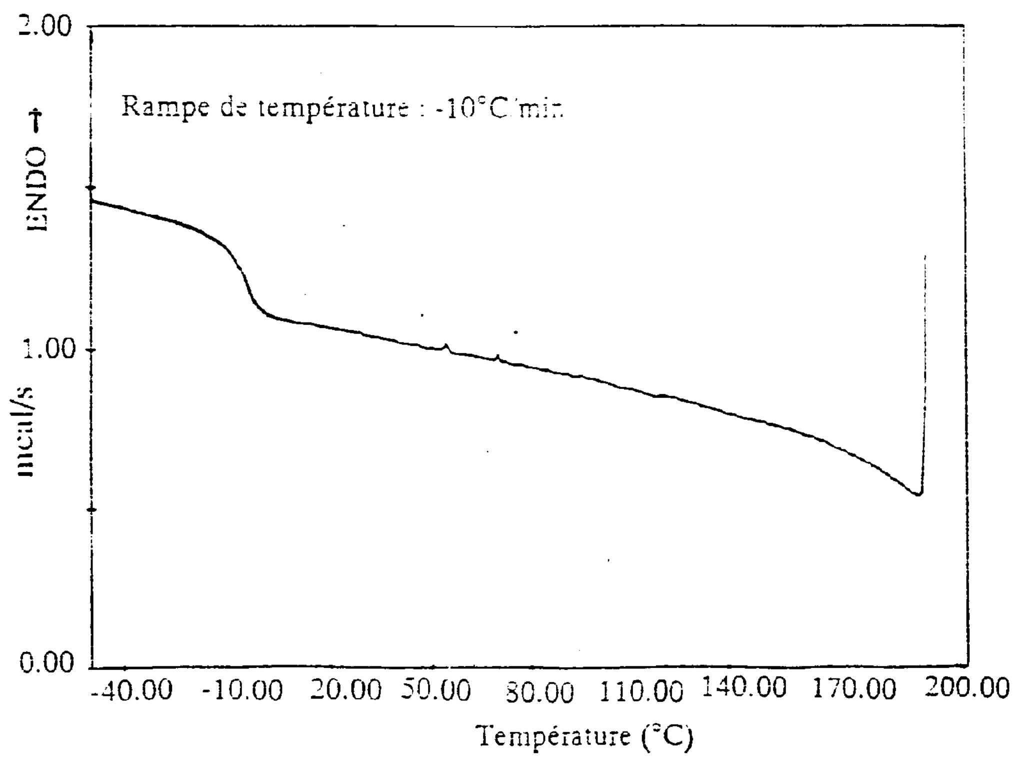


Figure 2

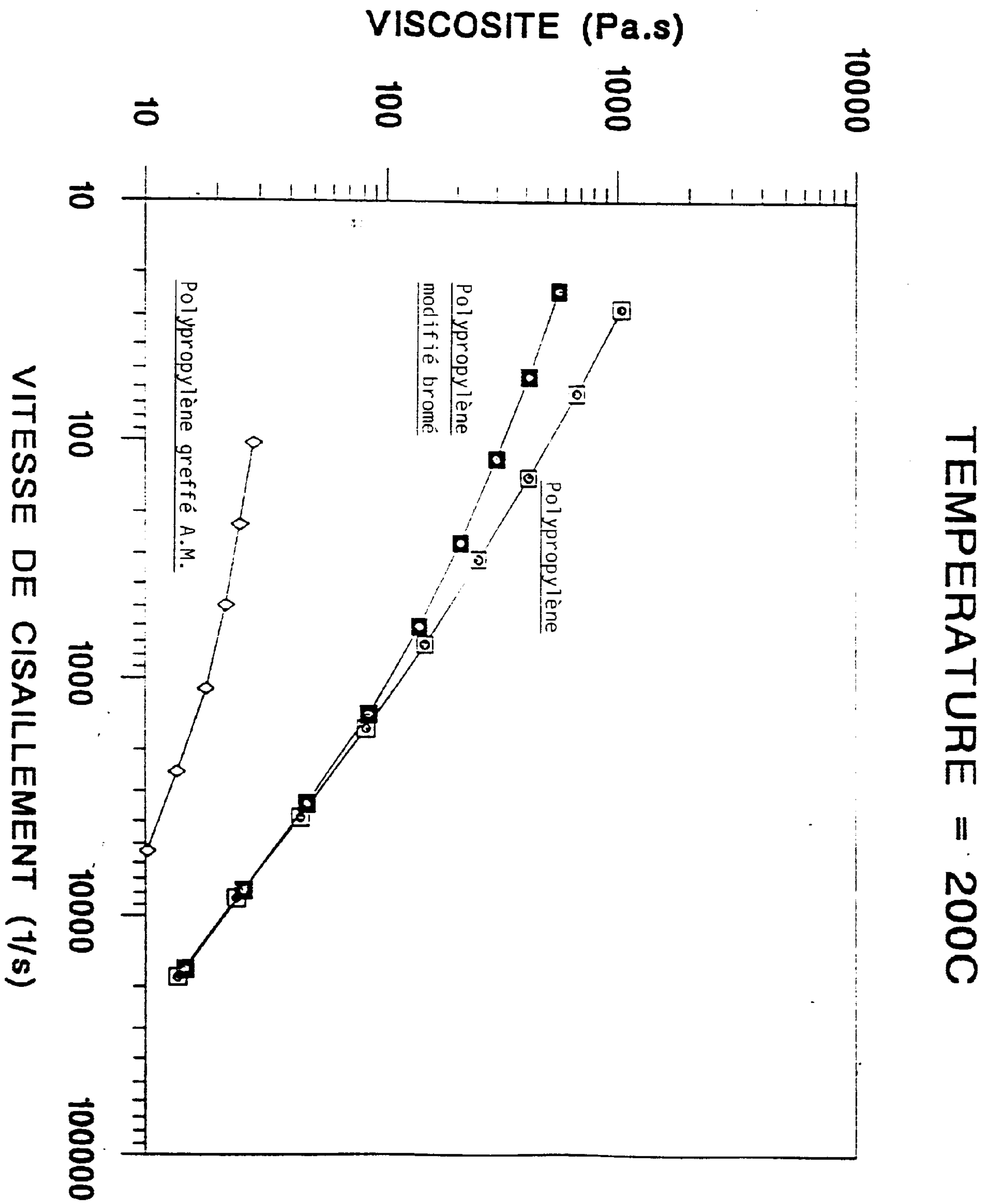

TEMPERATURE = 200C
VISCOSITE (Pa.s)
10000
1000
100
10
10
100
1000
10000
100000
VITESSE DE CISAILLEMENT (1/s)
Polypropylène
Polypropylène modifié bromé
Polypropylène greffé A.M.


Figure 3

Office européen des brevets

# RAPPORT DE RECHERCHE EUROPEENNE

Numero de la demande

EP 92 40 2576
Page 1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | WO-A-9 113 107 (GREAT LAKES CHEMICAL CORPORATION)<br>* page 12, ligne 17 - ligne 28 *<br>* page 13, ligne 9 - ligne 21 *<br>* page 15, ligne 19 - page 16, ligne 3; revendications 1-27 *<br>--- | 1,3,8, 11,13, 14,17, 21,23, 26,27 | C08F8/20<br>C08F255/02 |
| A | GB-A-1 023 407 (B. F. GOODRICH COMPANY)<br>* revendications 1-17 *<br>--- | 1 | |
| A | US-A-3 524 826 (E. N. KRESGE)<br>* le document en entier *<br>--- | 1 | |
| A | US-A-3 554 973 (EIICHI MORITA)<br>* revendications 1-23 *<br>--- | 1 | |
| A | WO-A-8 602 082 (EXXON RESEARCH AND ENGINEERING CO.)<br>* revendications 1-14 *<br>--- | 1 | DOMAINES TECHNIQUES RECHERCHES (Int. Cl.5 ) |
| A | CHEMICAL ABSTRACTS, vol. 87, no. 24, 12 Décembre 1977, Columbus, Ohio, US; abstract no. 185660c, 'POLYMER-BASED HETEROGENEOUS HYDROGENATION CATALYSTS' page 49 ;colonne 2 ;<br>* abrégé *<br>& JP-A-76 048 792 (UNISEARCH LTD.) 27 Avril 1976<br>---<br>-/-- | 1 | C08F |

Le présent rapport a été établi pour toutes les revendications

| Lieu de la recherche | Date d'achèvement de la recherche | Examinateur |
|---|---|---|
| LA HAYE | 06 NOVEMBRE 1992 | PERMENTIER W.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

Office européen des brevets

# RAPPORT DE RECHERCHE EUROPEENNE

Numero de la demande

EP 92 40 2576
Page 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | CHEMICAL ABSTRACTS, vol. 93, no. 12, 12 Décembre 1980, Columbus, Ohio, US; abstract no. 221492j, 'FOAMABLE SELF-EXTINGUISHING THERMOPLASTIC RESIN GRANULES' page 32 ;colonne 1 ; * abrégé * & JP-A-80 078 029 (SEKISUI CHEMICAL CO., LTD.) 12 Juin 1980 | 1 | |
| | ----- | | DOMAINES TECHNIQUES RECHERCHES (Int. Cl.5 ) |

Le présent rapport a été établi pour toutes les revendications

| Lieu de la recherche | Date d'achèvement de la recherche | Examinateur |
|---|---|---|
| LA HAYE | 06 NOVEMBRE 1992 | PERMENTIER W.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)